# EUROPÄISCHE PATENTSCHRIFT

(11) **EP 2 176 088 B1**
(45) Veröffentlichungstag und Bekanntmachung des Hinweises auf die Patenterteilung: **28.03.2012**
(21) Anmeldenummer: 08773808.4
(22) Anmeldetag: 02.07.2008
(51) Int. Cl.: B60N 2/30, B60N 2/01

(54) **FAHRZEUGSITZ MIT SICHERUNGSMITTEL FÜR EIN UNTERSTÜTZUNGSELEMENT**
VEHICLE SEAT WITH SECURING DEVICE FOR A SUPPORT ELEMENT
SIÈGE DE VÉHICULE COMPRENANT DES MOYENS DE FIXATION DESTINÉS À UN ÉLÉMENT D'APPUI

(30) Priorität: 05.07.2007 DE 102007031454; 16.11.2007 DE 102007055081
(43) Veröffentlichungstag der Anmeldung: 21.04.2010
(73) Patentinhaber: Johnson Controls GmbH, 51399 Burscheid (DE)
(72) Erfinder: WOOLSTON, Stuart, Glasgow G75 8TZ (GB); FLUCHT, Stefan, 71126 Gäufelden (DE); SZEGENY, Peter, 51371 Leverkusen (DE)
(74) Vertreter: Wolff, Felix
(86) Internationale Anmeldenummer: PCT/EP2008/005388
(87) Internationale Veröffentlichungsnummer: WO 2009/003690

(56) Entgegenhaltungen:
- EP-A- 1 449 710
- EP-A- 1 493 624
- JP-A- 2002 225 603
- US-A- 808 679

## Beschreibung

Die vorliegende Erfindung betrifft einen Fahrzeugsitz mit mindestens einem ersten Segment, einem zweiten Segment und einem Mittelsegment, wobei das erste Segment, das zweite Segment und das Mittelsegment jeweils Sitzteile aufweisen. Das Sitzteil des Mittelsegments ist dabei unter dem Sitzteil des ersten Segments in einer Verstaustellung verstaubar. In einer Gebrauchsstellung ist das Mittelsegment mit dem zweiten Segment mittels eines Unterstützungselements in Kontakt, wobei das Mittelsegment das Unterstützungselement aufweist.

Derartige Fahrzeugsitze sind aus dem Stand der Technik bekannt. In der bisher nicht veröffentlichten Patentanmeldung DE 10 2007 013 376 wird beispielsweise ein Fahrzeugsitz mit einem verstaubaren Mittelsitzteil offenbart. Die Patentanmeldung DE 10 2007 013 376 wird als Referenz eingeführt und ist Teil der Offenbarung. In der Druckschrift EP 1 449 710 A2 wird ebenfalls ein Fahrzeugsitz mit einem verstaubaren Sitzteil eines Mittelsegments offenbart, wobei ein Bügel das Sitzteil des Mittelsegments abstützt. Der Bügel ist klappbar an der Sitzstruktur befestigt und stützt sich in der Gebrauchsstellung am Fahrzeugboden auf. Hierfür weist der klappbare Bügel vertikal eine lange und damit unstabile Strebe auf und ist zudem durch den Klappmechanismus verschleißanfällig und wackelig. Die bisher bekannten Unterstützungselemente für das Mittelsegment haben somit den Nachteil, dass sie, insbesondere in einem Crash, wegrutschen oder einknicken. Ein plötzliches Einklappen oder Wegnitschen des Unterstützungselements führt jedoch zu einem Einknicken des Mittelsegmentsitzteils und somit zu einem erhöhten Verletzungsrisiko eines Fahrzeuginsassen der auf diesem sitzt.

Ein gattungsgemäßer Sitz aus dem dokument US-A-808679 bekannt.

Es war daher die Aufgabe der vorliegenden Erfindung einen Fahrzeugsitz vorzusehen, bei dem auch im Crash-Fall ein Unterstützungselement das Mittelsegmentsitzteil sicher abstützt. Trotzdem sollte das Unterstützungselement möglichst wenig Bauraum einnehmen und robust ausgestaltet sein.

Gelöst wird die Aufgabe durch einen Fahrzeugsitz mit mindestens einem ersten Segment, einem zweiten Segment und einem Mittelsegment, wobei alle Segmente jeweils ein Sitzteil aufweisen. Das Sitzteil des Mittelsegments (Mittelsegmentsitzteil) ist dabei in einer Verstaustellung unter dem Sitzteil des ersten Segments verstaubar. In einer Gebrauchsstellung ist das Mittelsegment mit dem ersten Segment verbunden und steht mit dem zweiten Segment über ein Unterstützungselement in Kontakt. Das Mittelsegment weist das Unterstützungselement auf. Um beispielsweise bei einem Crash eine ungewollte Bewegung des Unterstützungselements und somit des Mittelsegmentsitzteils zu verhindern, wird das Unterstützungselement bekannterweise mittels mindestens einem Sicherungsmittel bezüglich einer Bewegung in eine Z-Richtung und eine Y-Richtung gesichert.

Vorzugsweise umfasst das mindestens eine Sicherungsmittel ein erstes Sicherungsmittel und ein zweites Sicherungsmittel.

Bevorzugt verhindert das erste Sicherungsmittel dabei eine Bewegung des Unterstützungselements in Y-Richtung, also eine Bewegung im Wesentlichen senkrecht zur Sitzfläche des Mittelsegmentsitzteils. Weiterhin bevorzugt verhindert das zweite Sicherungsmittel eine Bewegung des Unterstützungselements in Z-Richtung, also eine Bewegung quer zur Längserstreckung des Mittelsegmentsitzteils. Selbst bei einem Crash verbleibt das Unterstützungselement somit im Wesentlichen in der gleichen Position bezüglich des zweiten Segments. In vorteilhafter Weise kann hierdurch ein ungewolltes Absenken des Mittelsegmentsitzteils gegenüber dem Sitzteil des zweiten Segments oder ein Einklappen in Richtung des ersten Segments verhindert werden.

Das erste und das zweite Segment umfassen bevorzugt zum einen jeweils ein Sitzteil und zum anderen jeweils eine Rückenlehne. Das Mittelsegment ist zwischen dem ersten und dem zweiten Segment angeordnet und umfasst ebenfalls ein Sitzteil und eine Rückenlehne. Das Mittelsegmentsitzteil und die Rückenlehne des Mittelsegments sind jedoch bevorzugt schmaler ausgebildet als die des ersten oder des zweiten Segments und/oder die Rückenlehne des Mittelsegments ist kollabierbar ausgebildet.

Bevorzugt weist die Sitzstruktur des Mittelsegments auf der Seite zum zweiten Segment das Unterstützungselement auf. Die Sitzstruktur des Mittelsegments ist weiterhin bevorzugt über ein Scharnier mit dem Sitzteil des ersten Segments verbunden und kann zusammen mit diesem längsverstellt werden. Durch das Scharnier kann das Mittelsegmentsitzteil zudem in Richtung des Sitzteils des ersten Segments verklappt werden, um unterhalb dessen Sitzteils verstaut zu werden (Verstaustellung). Das Scharnier stabilisiert beziehungsweise hält jedoch auch die zum ersten Segment angrenzende Seite des Mittelsegmentsitzteils. Die hierzu gegenübertiegende Seite des Mittelsegmentssitzteils stützt sich über das Unterstützungselement auf dem zweiten Segment auf. Besonders bevorzugt steht dabei das Unterstützungselement mit der Sitzstruktur des zweiten Segments in Kontakt.

Unter der Sitzstruktur eines Sitzteils soll bevorzugt sowohl die Tragestruktur des Polsterträgers als auch Befestigungsschienen, Konsolen oder sonstige Unterkonstruktionen des Fahrzeugsitzes verstanden werden.

Bevorzugt geht das Unterstützungselement mit dem ersten und/oder mit dem zweiten Sicherungsmittel in der Gebrauchsstellung eine form- und/oder kraftschlüssige Verbindung ein. Besonders bevorzugt muss zunächst eine form- und/oder kraftschlüssige Verbindung zwischen dem ersten Sicherungsmittel und dem Unterstützungselement gelöst werden, bevor eine form- und/oder kraftschlüssige Verbindung zwischen dem zweiten Sicherungsmittel und dem Unterstützungselement gelöst werden kann. Erst wenn zwischen dem Unterstützungsetement und den Sicherungsmitteln keine form- und/oder kraftschlüssige Verbindung mehr besteht, kann das Mittelsegmentsitzteil bevorzugt in die Verstaustellung überführt werden. Durch die form- und/oder kraftschlüssige Verbindung zwischen den Sicherungsmitteln und dem Unterstützungselement wird bevorzugt das Unterstützungselement an einer Bewegung in Z- und Y- Richtung gehindert, wobei zum Verfassen der Gebrauchsstellung zwei Sicherungsmittel gelöst werden müssen. Unter einer Gebrauchsstellung des Mittelsegmentsitzteils soll bevorzugt verstanden werden, wenn ein Fahrzeuginsasse darauf Platz nehmen kann. In diesem Fall steht weiterhin bevorzugt die Rückenlehne des Mittelsegments im Wesentlichen aufrecht auf dem Mittelsegmentsitzteil, damit sich der gleiche Fahrzeuginsasse daran anlehnen kann.

Weiterhin bevorzugt weist die Sitzstruktur des zweiten Segments eine Führungsschiene auf, in der ein Schlitten führbar ist. Der Schlitten wiederum weist erfindungsgemäß die Sicherungsmittel auf. Das Unterstützungselement ist dabei durch die form- und/oder kraftschlüssige Verbindung mit den Sicherungsmitteln mit dem Schlitten in Kontakt. Mittels des Schlittens und der Führungsschiene sind das Mittelsegmentsitzteil und das Sitzteil des zweiten Segments gegeneinander längsverstellbar. Wird beispielsweise das Sitzteil des ersten Segments längsverstellt, so verstellt sich durch die Verbindung mit dem Scharnier das Mittelsegmentsitzteil entsprechend mit und gleitet mit dem Schlitten in der Führungsschiene entlang. Hierdurch wird eine Längsverstellung gegenüber dem Sitzteil des zweiten Segments erreicht.

Vorzugsweise können die form- und/oder kraftschlüssigen Verbindungen zwischen dem Unterstützungselement und den Sicherungsmitteln nur in einer vorbestimmten Position der Sitzteile zueinander und/oder durch die Betätigung eines zusätzlichen Aktuierungsmittels gelöst werden. Ohne die Verwendung eines Aktuierungsmittels muss bezüglich der einzunehmenden vorbestimmten Position sichergestellt werden, dass diese Position nicht versehentlich eingenommen werden kann. Beispielsweise ist es möglich, dass die form- und/oder kraftschlüssigen Verbindungen nur gelöst werden, wenn alle drei Sitzteile eine gleiche vorbestimmte Längsverstellung aufweisen und/oder zusätzlich ein Aktuierungsmittel betätigt wird. Ein solches Aktuierungsmittel kann beispielsweise eine Handhabe sein, die mit einem Bowdenzug verbunden ist, der ein einen Verriegelungsmechanismus deaktiviert. Durch die einzunehmende vorbestimmte Position und/oder das Aktuierungsmittel wird vorteilhaft verhindert, dass die Sicherung des Unterstützungselements ungewollt gelöst wird.

Bevorzugt ist das Unterstützungselement in einem ersten Ausführungsbeispiel gabelförmig mit einer Ausnehmung. Das zweite Sicherungsmittel ist bevorzugt als Pilzkopf-Bolzen ausgebildet, wobei die Ausnehmung des gabelförmigen Unterstützungselements den Pilzkopf-Bolzen umfasst. Der Kopf des Pilzkopf-Bolzen verhindert dabei eine Bewegung des Unterstützungselements quer zur Längsausstreckung des Sitzteils (Z-Richtung), da die Ausnehmung nicht über den Kopf hinweg verschoben werden kann.

Weiterhin weist das Unterstützungselement bevorzugt eine Nase auf, die mit dem ersten Sicherungsmittel in der Gebrauchsstellung zusammenwirkt. Das erste Sicherungsmittel ist hierbei vorzugsweise eine drehbare Doppelnocke mit einem ersten und einem zweiten Nockenteil. Der erste Nockenteil wirkt dabei form- und/oder kraftschlüssig mit der Nase des Unterstützungselements zusammen und verhindert eine Bewegung im Wesentlichen senkrecht zur Sitzfläche des Sitzteils (Y-Richtung). Der zweite Nockenteil wirkt bevorzugt mit der Führungsschiene zusammen und ist vorzugsweise in Richtung der Führungsschiene durch ein Federmittel vorgespannt. Soll das Mittelsegmentsitzteil in der Gebrauchsstellung verschoben werden, so bewegt sich durch die Verbindung zwischen dem Unterstützungselement und den Sicherungsmitteln der Schlitten innerhalb der Führungsschiene. Hierdurch wird die Verstellung des Mittelsegmentsitzteiles besonders leichtgängig und gleichzeitig wird das Mittelsegmentsitzteil optimal gestützt.

Für eine Verstellung von einer Gebrauchsstellung in eine Verstaustellung wird das Mittelsegmentsitzteil und das Sitzteil des zweiten Segments bevorzugt in die vorbestimme Position zueinander gebracht. In dieser Position kann der zweite Nockenteil in eine Kerbe der Führungsschiene eingreifen, wodurch sich der gesamte Doppelnocken von dem Unterstützungselement weg dreht. Hierdurch besteht nicht länger die form- und/oder kraftschlüssige Verbindung zwischen dem ersten Nockenteil und der Nase des Unterstützungsetements. Das Mittelsegmentsitzteil kann dann zusammen mit dem Unterstützungselement angehoben und in Richtung des Sitzteils des ersten Segments verklappt werden. Die Position der Kerbe in der Führungsschiene ist dabei abhängig von der zu wählenden vorbestimmten Position. Denkbar sind auch zwei oder eine Vielzahl von Kerben in der Führungsschiene, durch die zwei oder eine Vielzahl von vorbestimmten Positionen zur Überführung in der Verstaustellung ermöglicht werden.

Bei einer nicht beanspruchten Ausführungsform der vorliegenden Erfindung ist das Unterstützungselement als Bügel ausgebildet, wobei sich das Unterstützungselement mit einem Kontaktbereich auf einer Leiste des Fahrzeugsitzes abstützt. Die Leiste ist bevorzugt an der Sitzstruktur des Sitzteils des zweiten Segments befestigt. Egal in welcher Längsverstellung die Sitzteile des zweiten Segments und des Mittelsegments in der Gebrauchsstellung zueinander sind, liegt immer in etwa die Hälfte des Kontaktbereichs des Unterstützungselements auf der Leiste auf. Wird beispielsweise das Sitzteil des zweiten Segments in die hinterste Stellung der Längsverstellung gestellt und das Mittelsegmentsitzteil ist zusammen mit dem Sitzteil des ersten Segments in der vordersten Stellung der Längsverstellung, so liegt immer noch etwa die Hälfte des Kontaktbereichs des Unterstützungselements auf der Leiste an dem zweiten Segment auf. Hierdurch wird das Mittelsegmentsitzteil in jeder

Position der Sitzteile zueinander sicher abgestützt, wodurch ein ungewolltes Absenken oder Verkippen des Mittelsegmentsitzteils verhindert wird. Zudem wird eine Beschädigung des Unterstützungselements durch eine zu geringe Auflagefläche des Kontaktbereichs und dadurch entstehende große Kräfte durch Habelwirkungen verringert.

Bevorzugt entspricht in diesen nicht beanspruchten Beispiel die Länge des Kontaktbereichs in etwa der Hälfte der Länge der Sitzstruktur des zweiten Segments. Bevorzugt ist die Länge des horizontal verlaufenden Kontaktbereichs wesentlich größer als die senkrecht verlaufende Bügelstruktur des Unterstützungselements. Die Leiste weist zudem bevorzugt eine Länge auf, die in etwa der Länge der Sitzstruktur des zweiten Segments entspricht.

Vorzugsweise weist die Sitzstruktur des zweiten Segments in diesen nicht beanspruchten Beispiel ein Halteelement auf und dieses Halteelement wiederum weist die Leiste auf.

Weiterhin bevorzugt weist die Leiste in diesen nicht beanspruchten Beispiel Dämpfungseigenschaften auf, so dass keine störenden Klappergeräusche entstehen, wenn das Unterstützungselement - beispielsweise im Fahrbetrieb - auf die Leiste aufschlägt. Weiterhin weist die Leiste bevorzugt Materialeigenschaften auf, die das Gleiten des Kontaktbereichs auf der Leiste erleichtern. So wird vorteilhaft die Verstellung des Mittelsegmentsitzteils oder des Sitzteils des zweiten Segments leichtgängiger.

Vorzugsweise ist das Halteelement in diesen nicht beanspruchten Beispiel im Wesentlichen U-förmig ausgebildet, wobei das Unterstützungselement mit seinem Kontaktbereich im Wesentlichen im Bereich der Umbiegungsstelle des U-förmigen Halteelements auf der Leiste aufliegt. Die Umbiegungsstelle weist eine erhöhte Stabilität auf Grund ihrer Geometrie und/oder einer Materialverdickung auf, so dass auch bei einer großen Kraft die auf das Unterstützungselement und somit auf das Halteelement wirkt, keine Beschädigungen des Halteelements auftreten.

Bevorzugt wird auch in in diesen nicht beanspruchten Beispiel das Unterstützungselement durch ein Sicherungsmittel gesichert. In diesen nicht beanspruchten Beispiel ist das Sicherungsmittel bevorzugt ein wandnartiges Bauteil, beispielsweise ein Blech, welches mit dem Halteelement in Kontakt steht. Durch das Sicherungsmittel wird verhindert, dass das Unterstützungselement in Z-Richtung von der Leiste rutscht. Weiterhin bevorzugt steht das Unterstützungsetement seitlich von der Sitzstruktur des Mitteisegmentsitzes ab. Das Unterstützungselement wird hierbei jedoch von den Polsterteilen des Mittelsegmentsitzteils und des Sitzteils des zweiten Segments verdeckt, so dass kein Verletzungsrisiko für Fahrzeuginsassen besteht. Durch das abstehende Unterstützungselement kann dieses jedoch vorteilhaft auch als Griff verwendet werden, wenn das Mittelsegmentsitzteil in die Verstaustellung überführt werden soll.

Bevorzugt wird der Fahrzeugsitz nach der ersten oder den nicht beanspruchten Ausführungsform als Rücksitzbank in einem Fahrzeug verwendet. Ganz besonders bevorzugt kann der erfindungsgemäße Fahrzeugsitz als Mittelsitzbank in einem Fahrzeug mit drei Fahrzeugsitzreihen vorgesehen sein.

Im Nachfolgenden werden die beiden Ausführungsformen der Erfindung anhand von Figuren erläutert. Die Erläuterungen sind lediglich beispielhaft und schränken den allgemeinen Erfindungsgedanken nicht ein.
- **Figur 1**: stellt schematisch einen Fahrzeugsitz dar.
- **Figur 2**: stellt schematisch Sitzteile des Fahrzeugsitzes dar.
- **Figur 3**: stellt schematisch ein erstes Segment des Fahrzeugsitzes und ein Mittelsegmentsitzteil dar.
- **Figur 4**: stellt schematisch einen Fahrzeugsitz nach dem Stand der Technik dar.
- **Figuren 5a bis 5d**: stellen schematisch eine erste Ausführungsform des Fahrzeugsitzes mit Sicherungsmitteln dar.
- **Figuren 6a bis 6g**: stellen schematisch eine zweite Ausführungsform des Fahrzeugsitzes mit einem Bügel als Unterstützungselement dar.

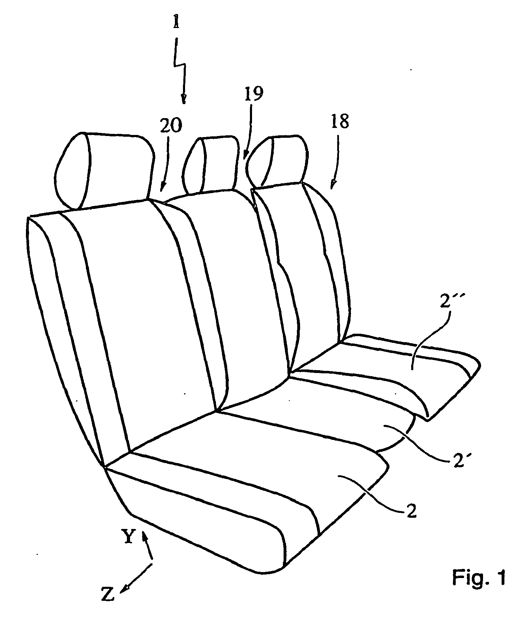

In der Figur 1 ist schematisch ein Fahrzeugsitz 1 in einer Gebrauchsstellung dargestellt, wobei es sich bevorzugt um eine Rücksitzbank eines Kraftfahrzeuge handelt. Der Fahrzeugsitz 1 weist ein erstes Segment 20. ein zweites Segment 18 und ein Mittelsegment 19 auf. Jedes Segment 18, 19, 20 weist bevorzugt ein Sitzteil 2", 2', 2 und eine Rückenlehne auf.

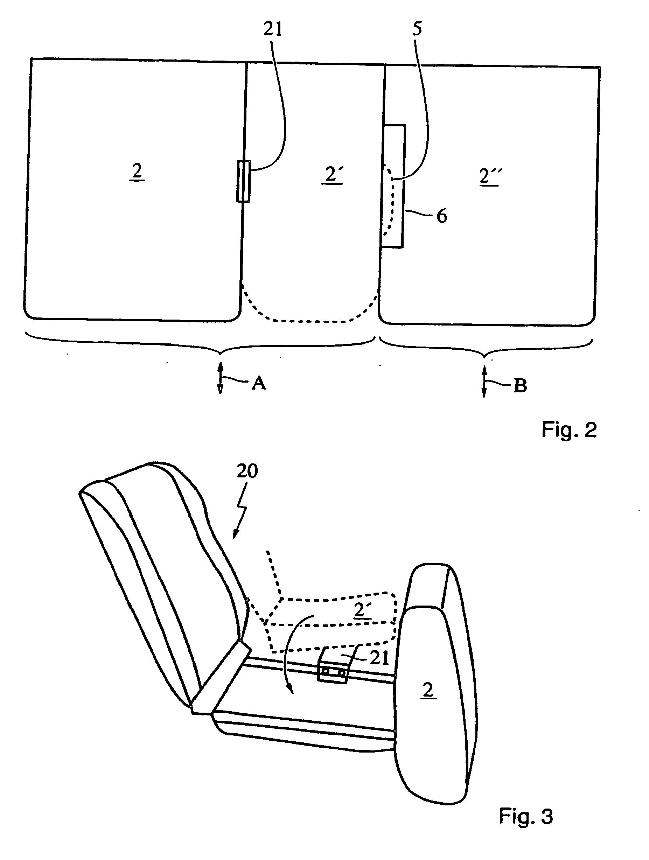

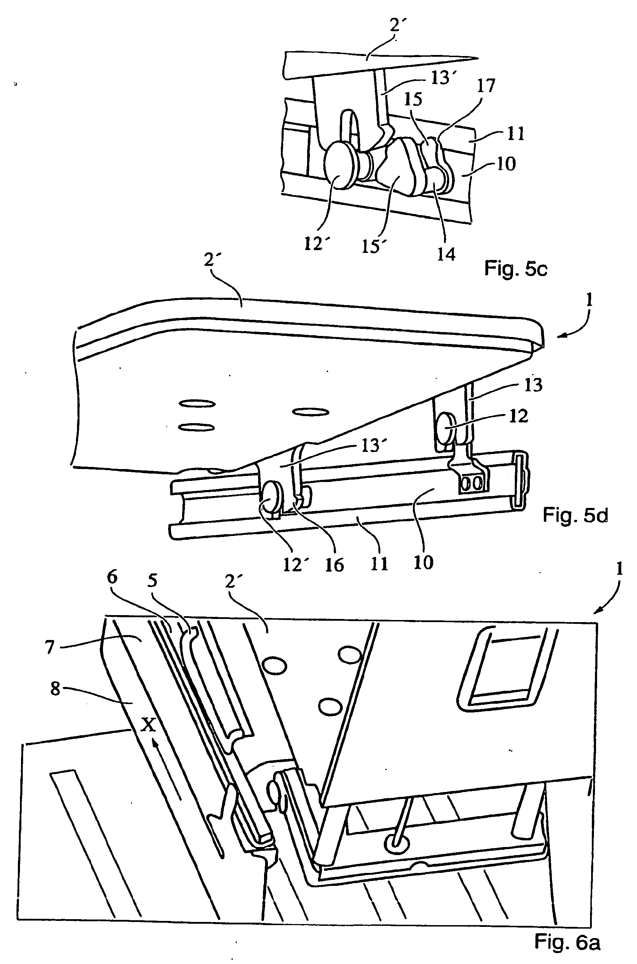

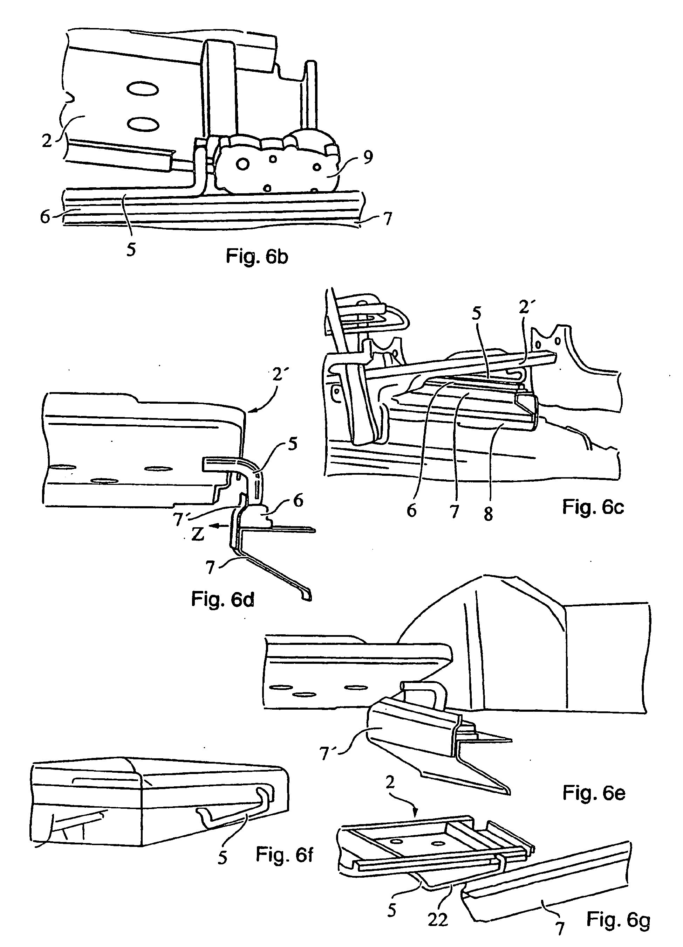

Wie in Figur 2 schematisch dargestellt, ist das Mittelsegmentsitzteil 2' mittels eines schematisch dargestellten Schwenkmechanismus 21 mit dem Sitzteil 2 des ersten Segments 20 verbunden. Wird das Sitzteil 2 des ersten Segments 20 zur Komfortverbesserung nach vorne oder nach hinten längsverstellt - wie durch den Pfeil A dargestellt - wird das Mittelsegmentsitzteil 2' mitverschoben. Im Wesentlichen inhabhängig von der Verschiebung des Mittelsegmentsitzteils 2' und des Sitzteils 2 des ersten Segments 20 kann das Sitzteil 2" des zweiten Segments 18 nach vorne oder nach hinten verschoben werden (Pfeil B). Damit das Mitteisegrnentsitzteil 2' trotzdem von dem Sitzteils 2" beziehungsweise von der Sitzstruktur des zweiten Segments 18 gestützt wird, weist das Mittatsegmentsitzteil 2' in Figur 2 ein Unterstützungselement 5 auf. Das Unterstützungselement 5 liegt dabei in diesem Ausführungsbeispiel (siehe zweite Ausführungsform Figuren 6a bis 6g) auf einer Leiste 6 auf. Wird das Mittelsegmentsitzteil 2' und/oder das Sitzteil 2" des zweiten Segments 18 verschoben, so verschiebt sich das Unterstützungselement 5 auf der Leiste 6 und/oder die Leiste 6 verschiebt sich.

In Figur 3 ist schematisch das erste Segment 20 und das Mittelsegmentsitzteil 2' dargestellt. Das Sitzteil 2 des ersten Segments 20 ist senkrecht verklappt worden, so dass ein unterhalb des Sitzteils 2 vorliegender Stauraum zugänglich wird. In diesen Stauraum kann dann das Mittelsegmentsitzteil 2' mittels des Schenkmechanismus 21 geklappt werden. Der Schwenkmechanismus 21 ist beispielweise ein Scharnier, welches das Mittelsegmentsitzteil in der Gebrauchsstellung zumindest einseitig unterstützt beziehungsweise hält und mit dem Sitzteil 2 des ersten Segments 20 verbindet.

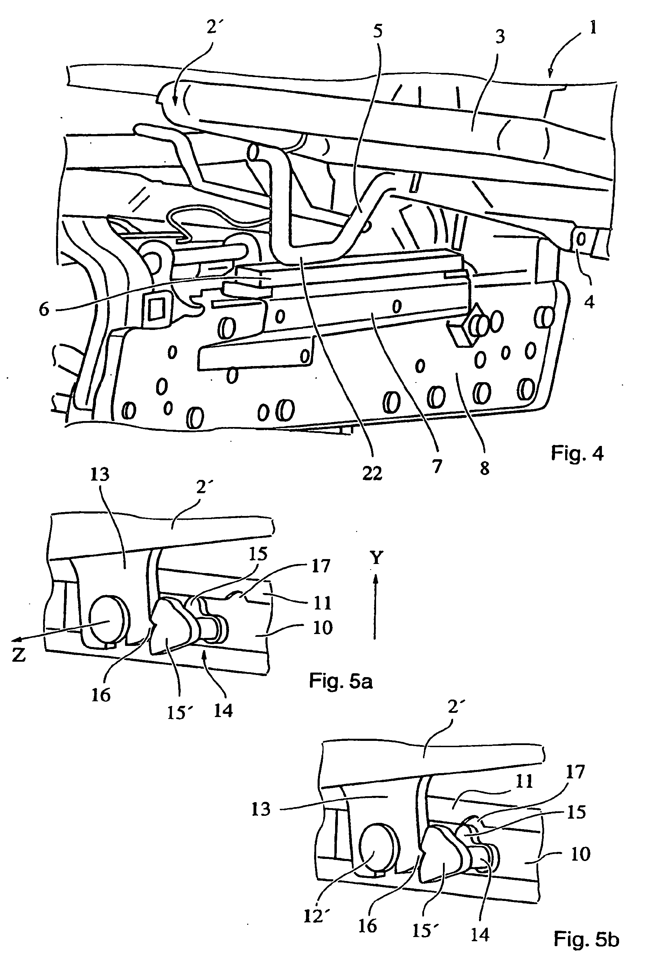

In Figur 4 ist schematisch ein aus der Praxis vorbekannter Fahrzeugsitz 1 dargestellt. Er besteht aus einem zur Seite wegklappbaren Sitzteils 2', von dem in der Figur 4 die Rohrstruktur 3 gezeigt ist. An dem dem Gelenk 4 gegenüberliegenden Seitenholm der Rohrstruktur 3 ist ein Bügel als Unterstützungselement 5 angeordnet, der mit seinen nach oben ragenden Schenkeln mit der Rohrstruktur 3 verschweißt ist. Die Unterseite des Bügels 5 liegt verschiebbar auf einer Dämpfungsleiste 6 aus Kunststoff oder Elastomer auf, welche über eine metallische Halterung 7 mit der Konsole 8 des Fahrzeugsitzes 1 verbunden ist. Die Halterung 7 kann dabei auch als Halteelement 7 bezeichnet werden und die Dämpfungsleiste 6 als Leiste 6. Die Unterkonstruktion 8, die Halterung 7 und die Leiste 6 bilden mit oder ohne andere Teile eine Sitzstruktur. Der Kontaktbereich 22 des Bügels 5 ist nach dem Stand der Technik sehr kurz ausgebildet, so dass bei bestimmten Stellungen des Mittelsegmentsitzteils 2' gegenüber dem Sitzteil 2" des zweiten Segments 18 kaum Kontaktbereich 22 auf der Leiste 6 aufliegt. Ist beispielsweise das Mittelsegmentsitzteil 2' in seiner vordersten Position der Längsverstellung und das Sitzteil 2" des zweiten Segments 18 in seiner hintersten Position der Längsverstellung verschoben (statisch ungünstigste Sitzeinstellung), so liegt kaum Kontaktbereich 22 auf der Leiste 6 auf. In diesem Fall kann das Mittelsegmentsitzteil 2' nicht sicher durch den Bügel 5 abgestützt werden. Dieser vorbekannte Fahrzeugsitz 1 soll daher erfindungsgemäß verbessert werden.

In den Figuren 5a bis 5d wird ein erster verbesserter Fahrzeugsitz 1 gezeigt. Die Figuren 6a bis 6g betreffen eine andere Ausführung der Erfindung.

Bei der Ausführungsform gemäß den Figuren 6a bis 6g soll die Sitzstruktur im Wesentlichen dem vorbekannten Fahrzeugsitz aus Figur 4 entsprechen. Wie aus den Figuren 6a, 6g und 6f ersichtlich, wurde jedoch die Länge (Ausdehnung in X-Richtung) des Bügels 5 (als Unterstützungselement 5) und damit die größtmögliche Auflagefläche beziehungsweise der größtmögliche Kontaktbereich 22 auf der Dämpfungsleiste 6 auf etwa 40 bis 60%, insbesondere etwa 50% der Länge der Sitzstruktur des Sitzteils 2" des zweiten Segments 18 verlängert. Dämpfungsleiste 6 und Bügel 5 sind so zueinander abgestimmt, dass auch bei einer statisch ungünstigen Sitzeinstellung noch mindestens die Hälfte des Bügels 5 auf der Dämpfungsleiste 6 aufliegt, jedoch seitlich über das Sitzteil 2 hinaus steht (Figur 6f, 6d). Die Dämpfungsleiste 6 erstreckt sich im Wesentlichen über die gesamte Länge der Konsole 8. Die Schweißung des Bügels 5 ist so ausgeführt, dass keine Kollision mit einem Getriebe 9 der Sitzverstellung auftritt (Figuren 6a, 6b). Das hintere Ende des Bügels 5 ist dabei von der Seite her in eine Ausnehmung der Struktur des Sitzteils 2 eingesteckt und verschweißt, während das vordere Ende des Bügels 5 quer zur Sitzrichtung gebogen und von unten auf die Struktur aufgeschweißt ist. Eine Halterung beziehungsweise ein Halteelement 7 besteht aus einem U-förmig gekantetem Blech, auf dessen Schenkel der Bügel 5 nahe der Basis des "U"s auf der Leiste 6 aufliegt. Ein den Bügel 5 hintergreifendes Blech 7' oder Halterung 7 sichert die Auflage gegen ein Verrutschen des Bügels 5 in Z-Richtung. Das Blech 7' kann daher auch als Sicherungsmittel 7' bezeichnet werden. Das Halteelement 7, das Sicherungsmittel 7', die Leiste 6 und die Konsole 8 sind bevorzugt an der Sitzstruktur des zweiten Segments 18 angebracht oder bilden diese aus.

Bei einer anderen Ausführungsform der Erfindung gemäß der Figuren 5a bis 5d ist das Sitzteil 2' des Mittelsegments 19 des Fahrzeugsitzes 1 an der betreffenden Seite lösbar an einem Schlitten 10 einer Schiene 11 geführt und mit dieser über seitlich aus dem Schlitten 10 auskragende Pilzköpfe 12, 12' verbunden (Figur 5d). Auf die Schäfte dieser Pilzköpfe 12, 12' werden Gabeln 13, 13' des Sitzteils 2' des Mittelsegments 19 aufgesteckt und durch das in Figur 5a bis 5c gezeigte Verriegelungssystem lösbar gesichert. Die Schiene 11 kann auch als Führungsschiene 11 bezeichnet werden und ist bevorzugt an der Sitzstruktur des zweiten Segments 18 angeordnet. Die Gabeln 13, 13' können auch als Unterstützungsalement 13, 13' bezeichnet werden und sind bevorzugt mit der Sitzstruktur des Mittelsegmentsitzteils 2' verbunden. Durch die Köpfe der Pilzköpfe 12,12' werden die Gabeln 13, 13' an einer Bewegung in Z-Richtung gehindert, so dass die Pilzköpfe 12, 12'als zweites Sicherungsmittel 12, 12' bezeichnet werden können.

Die Schiene 11 hat eine etwa C-förmige Gestalt und umgreift den Schlitten 10, welcher im Wesentlichen als hochkant stehendes Flachprofil ausgebildet ist. Auf dem Schlitten 10 ist nahe des hinteren Pilzkopfes 12' ein Doppelnocken 14 um eine horizontale Achse drehbar gelagert, wobei sich ein erster Nockenteil 15 gegen die Schiene 11 spannt, während ein zweiter Nockenteil 15' von oben auf einer Nase 16 der Gabel 13' aufliegt und diese auf dem Pilzkopf 12' verriegelt (Figur 5a). Die Nase 16 und der erste Nockenteil 15 gehen dabei eine form- und/oder kraftschlüssige Verbindung ein und verhindern eine Bewegung der Gabel 13' in Y-Richtung. In einer vorgegebenen Schiebestellung des Fahrzeugsitzes (Figur 5b), beziehungsweise des Mittelsegmentsitzteils 2' und des Sitzteils 2" des zweiten Segments 18 kommt der erste Nockenteil 15, beispielsweise angetrieben durch ein Federmittel, in Überdecktang mit einer Kerbe 17 in der Schiene 11, so dass der Doppelnocken 14 in eine die Gabel 13' freigebende Stellung verdreht werden kann (Figur 5c). Das Mittelsegmentsitzteil 2' kann nun seitlich verklappt werden. Beim erneuten Aufsetzen des Mittelsegmentsitzteils 2' und Verstellen des Schlittens 10 in der Schiene 11 erfolgt selbsttätig eine Verriegelung des Systems.

### Bezugszeichenliste

- 1: Fahrzeugsitz
- 2: Sitzteil erstes Segment
- 2': Sitzteil Mittelsegment, Mittelsegmentsitzteil
- 2": Sitzteil zweites Segment
- 3: Rohrstruktur
- 4: Gelenk
- 5: Unterstützungselement/Bügel
- 6: Leiste/Dämpfungsleiste
- 7: Halteelement/Halterung
- 8: Konsole
- 9: Getriebe
- 10: Schlitten
- 11: Führungsschiene/Schiene
- 12: zweites Sicherungsmittel/Pitzkopf/Pilzkopf-Bolzen
- 12': zweites SicherungsmifteUPilzkopf/Pilzkopf-Bolzen
- 13: Unterstützungselement/Gabel
- 13': Unterstützungselement/Gabel
- 14: erstes Sicherungsmittel/Doppelnocken
- 15: erster Nockenteil
- 15': zweiter Nockenteil
- 16: Nase (Gabel)
- 17: Kerbe (Führungsschiene)
- 18: zweites Segment
- 19: Mittelsegment
- 20: erstes Segment
- 21: Schwenkmechanismus
- 22: Kontaktbereich (Bügel)
- A: Richtungspfeil
- B: Richtungspfeil

## Patentansprüche

1. Fahrzeugsitz (1) mit mindestens einem ersten Segment (20), einem zweiten Segment (18) und einem Mittelsegment (19), wobei das erste Segment (20), das zweite Segment (18) und das Mittelsegment (19) jeweils ein Sitzteil (2, 2'. 2") aufweisen und das Sitzteil (2') des Mittelsegments (19) unter dem Sitzteil (2) des ersten Segments (20) In einer Verstaustellung verstaubar ist und das Mittelsegment (19) mit dem ersten Segment (20) in einer Gebrauchsstellung verbunden ist, wobei das Mittelsegment (19) ein Unterstützungselement (13, 13', 5) aufweist, mittels dem das Mittelsegment (19) mit dem zweiten Segment (18) In der Gebrauchsstellung in Kontakt steht, wobei das Unterstützungsetement (13, 13', 5) mittels mindestens einem Sicherungsmittel (12, 12', 14) in der Gebrauchsstellung bezüglich einer Bewegung in Z-Richtung und Y-Richtung gesichert ist, **dadurch gekennzeichnet, dass** ein Schlitten (10) das Sicherungsmittel (12, 12',14) aufweist.

2. Fahrzeugsitz (1) nach Anspruch 1, **dadurch gekennzeichnet, dass** das Sicherungsmittel (12, 12', 14) ein erstes Sicherungsmittel (12, 12') und ein zweites Sicherungsmittel (14) umfasst.

3. Fahrzeugsitz nach einem der vorhergehenden Ansprüche, **dadurch gekennzeichnet, dass** das erste Sicherungsmittel (12, 12') und/oder das zweite Sicherungsmittel (14) mit dem Unterstützungsmittel (13, 13', 5) eine form- und/oder kraftschlüssige Verbindung eingeht.

4. Fahrzeugsitz (10) nach einem der vorhergehenden Ansprüche, **dadurch gekennzeichnet, dass** eine Sitzstruktur des zweiten Segments (18) eine Führungsschiene (11) aufweist, in der der Schlitten (10) führbar ist.

5. Fahrzeugsitz (10) nach einem der vorhergehenden Ansprüche, **dadurch gekennzeichnet, dass** die form- und/oder kraftschlüssige Verbindung zwischen dem Sicherungsmittel (12,12',14) und dem Unterstützungsmittel (13,13', 5) lösbar ist, wenn die Sitzteile (2', 2") des Mittelsegment (19) und des zweiten Segments (15) eine vorbestimmte Position einnehmen und/oder ein Aktuierungsmittel betätigt wird.

6. Fahrzeugsitz (10) nach einem der vorhergehenden Ansprüche, **dadurch gekennzeichnet, dass** das Unterstützungselement (13, 13', 5) gabelförmig ist und mit einer Ausnehmung einen Pilzkopf als zweites Sicherungsmittel (12, 12') zumindest teilweise umgreift und/oder eine Nase (16) aufweist.

7. Fahrzeugsitz (10) nach einem der vorhergehenden Ansprüche, **dadurch gekennzeichnet, dass** die Führungsschiene (11) eine Kerbe (17) aufweist.

8. Fahrzeugsitz (10) nach einem der vorhergehenden Ansprüche, **dadurch gekennzeichnet, dass** das zweite Sicherungsmittel (14) eine drehbare Doppelnocke (14) ist, wobei ein erster Nockenteil (15') form- und/oder kraftschlüssig mit der Nase (16) des Unterstützungselements (13') zusammenwirkt und ein zweiter Nockenteil (15) mit der Führungsschiene (11) zusammenwirkt

9. Fahrzeugsitz (1) nach Anspruch 8, **dadurch gekennzeichnet, dass** der zweite Nockenteil (15) mittels eines Federmittels in Richtung der Führungsschiene (11) vorgespannt ist.

10. Verwendung eines Fahrzeugsitzes gemäß einem der vorhergehenden Ansprüche als Rücksitzbank in einem Kraftfahrzeug.

## Claims

1. Vehicle seat (1) comprising at least one first segment (20), a second segment (18) and a central segment (19), the first segment (20), the second segment (18) and the central segment (19) respectively comprising a seat part (2, 2', 2") and the seat part (2') of the central segment (19) being able to be stowed under the seat part (2) of the first segment (20) in a stowage position and the central segment (19) being connected to the first segment (20) in a position of use, the central segment (19) comprising a support element (13, 13', 5) by means of which the central segment (19) is in contact with the second segment (18) in the position of use, the support element (13, 13', 5) in the position of use being secured relative to a movement in a Z-direction and a Y-direction by means of at least one securing device (12, 12', 14), **characterized in that** a slide (10) comprises the securing device (12, 12', 14).

2. Vehicle seat (1) according to Claim 1, **characterized in that** the securing device (12, 12', 14) comprises a first securing device (12, 12') and a second securing device (14).

3. Vehicle seat according to one of the preceding claims, **characterized in that** the first securing device (12, 12') and/or the second securing device (14) creates a positive and/or non-positive connection with the support means (13, 13', 5).

4. Vehicle seat (10) according to one of the preceding claims, **characterized in that** a seat structure of the second segment (18) has a guide rail (11) in which the slide (10) may be guided.

5. Vehicle seat (10) according to one of the preceding claims, **characterized in that** the positive and/or non-positive connection between the securing device (12, 12', 14) and the support means (13, 13', 5) may be released when the seat parts (2', 2") of the central segment (19) and of the second segment (18) adopt a predetermined position and/or an actuating means is actuated.

6. Vehicle seat (10) according to one of the preceding claims, **characterized in that** the support element (13, 13', 5) is fork-shaped, and with a recess at least partially encompasses a mushroom-head as a second securing device (12, 12') and/or has a lug (16).

7. Vehicle seat (10) according to one of the preceding claims, **characterized in that** the guide rail (11) has a groove (17).

8. Vehicle seat (10) according to one of the preceding claims, **characterized in that** the second securing device (14) is a rotatable double cam (14), a first cam part (15') cooperating positively and/or non-positively with the lug (16) of the support element (13') and a second cam part (15) cooperating with the guide rail (11).

9. Vehicle seat (1) according to Claim 8, **characterized in that** the second cam part (15) is pretensioned by means of a spring means in the direction of the guide rail (11).

10. Use of a vehicle seat according to one of the preceding claims as a rear seat bench in a motor vehicle.

## Revendications

1. Siège de véhicule (1) équipé d'au moins un premier segment (20), un deuxième segment (18) et un segment central (19), le premier segment (20), le deuxième segment (18) et le segment central (19) comportant respectivement une partie d'assise (2, 2', 2") et la partie d'assise (2') du segment central (19) pouvant être rangée en dessous de la partie d'assise (2) du premier segment (20) dans une position rangée et le segment central (19) pouvant être relié au premier segment (20) dans une position d'utilisation, le segment central (19) comportant un élément d'appui (13, 13', 5) à l'aide duquel le segment central (19) est en contact avec le deuxième segment (18) dans la position d'utilisation, l'élément d'appui (13, 13', 5) étant bloqué dans la position d'utilisation à l'aide d'au moins un moyen de fixation (12, 12', 14) de façon à ne plus pouvoir faire aucun mouvement dans la direction Z et la direction Y, **caractérisé en ce que** le moyen de fixation (12, 12',14) comporte un coulisseau (10).

2. Siège de véhicule (1) selon la revendication 1, **caractérisé en ce que** le moyen de fixation (12, 12', 14) comprend un premier moyen de fixation (12, 12') et un deuxième moyen de fixation (14).

3. Siège de véhicule selon l'une quelconque des revendications précédentes, **caractérisé en ce que** le premier moyen de fixation (12, 12') et/ou le deuxième moyen de fixation (14) forme avec le moyen d'appui (13, 13', 5) une liaison par complémentarité de formes et/ou de forces.

4. Siège de véhicule (10) selon l'une quelconque des revendications précédentes, **caractérisé en ce qu'**une un rail du deuxième segment (18) comporte un rail de guidage (11) dans lequel le coulisseau (10) peut être guidé.

5. Siège de véhicule (10) selon l'une quelconque des revendications précédentes, **caractérisé en ce que** la liaison par complémentarité de formes et/ou de forces peut être détachée entre le moyen de fixation (12, 12', 14) et le moyen d'appui (13, 13', 5) lorsque les parties de siège (2', 2") du segment central (19) et du deuxième segment (18) prennent une position prédéfinie et/ou qu'un moyen d'actionnement est actionné.

6. Siège de véhicule (10) selon l'une quelconque des revendications précédentes, **caractérisé en ce que** l'élément d'appui (13, 13', 5) prend une forme de fourche et entoure au moins en partie une tête de champignon servant de deuxième moyen de fixation (12, 12') avec un évidement et/ou comporte un nez (16).

7. Siège de véhicule (10) selon l'une quelconque des revendications précédentes, **caractérisé en ce que** le rail de guidage (11) comporte une entaille (17).

8. Siège de véhicule (10) selon l'une quelconque des revendications précédentes, **caractérisé en ce que** le deuxième moyen de fixation (14) est une double came (14) pivotable, une première partie de came (15') interagissant par complémentarité de formes et/ou de forces avec le nez (16) de l'élément d'appui (13') et une deuxième partie de came (15) interagissant avec le rail de guidage (11).

9. Siège de véhicule (1) selon la revendication 8, **caractérisé en ce que** la deuxième partie de came (15) est précontrainte à l'aide d'un moyen de ressort en direction du rail de guidage (11).

10. Utilisation d'un siège de véhicule selon l'une quelconque des revendications précédentes comme banquette arrière dans un véhicule automobile.
